# EUROPEAN PATENT SPECIFICATION

(11) **EP 0 592 214 B1**
(45) Date of publication and mention of the grant of the patent: **11.06.1997**
(21) Application number: 93307965.9
(22) Date of filing: 07.10.1993
(51) Int. Cl.: H02K 7/08, H02K 5/173, F16C 19/18, G11B 19/20

(54) **Compound ball-bearing**
Compound-Kugellager
Roulement à billes compose

(30) Priority: 07.10.1992 JP 293858/92; 09.11.1992 JP 323646/92
(43) Date of publication of application: 13.04.1994
(60) Divisional application: 96118356.3
(73) Proprietor: MINEBEA KABUSHIKI-KAISHA, Kitasaku-gun, Nagano-ken (JP)
(72) Inventor: Obara, Rikuro, c/o Minebea Kabushiki Kaisha, Kitasaku-ken, Nagano-ken (JP); Tatsuno, Katashi, c/o Minebea Kabushiki Kaisha, Kitasaku-ken, Nagano-ken (JP)
(74) Representative: Bankes, Stephen Charles Digby

(56) References cited:
- EP-A- 0 597 678
- DE-A- 3 224 448
- DE-A- 3 540 363
- US-A- 4 408 808
- US-A- 4 713 704
- US-A- 5 013 947
- US-A- 5 045 738
- US-A- 5 128 571
- PATENT ABSTRACTS OF JAPAN vol. 13, no. 70 (P-829) 17 February 1989 & JP-A-63 255 869
- PATENT ABSTRACTS OF JAPAN vol. 11, no. 65 (E-484) (2512) 27 February 1987 & JP-A-61 224 836
- PATENT ABSTRACTS OF JAPAN vol. 9, no. 182 (P-376) (1905) 27 July 1985 & JP-A-60 052 953

## Description

This invention relates to ball-bearings mainly used for office automation (OA) apparatus motors and components thereof e.g. in computers.

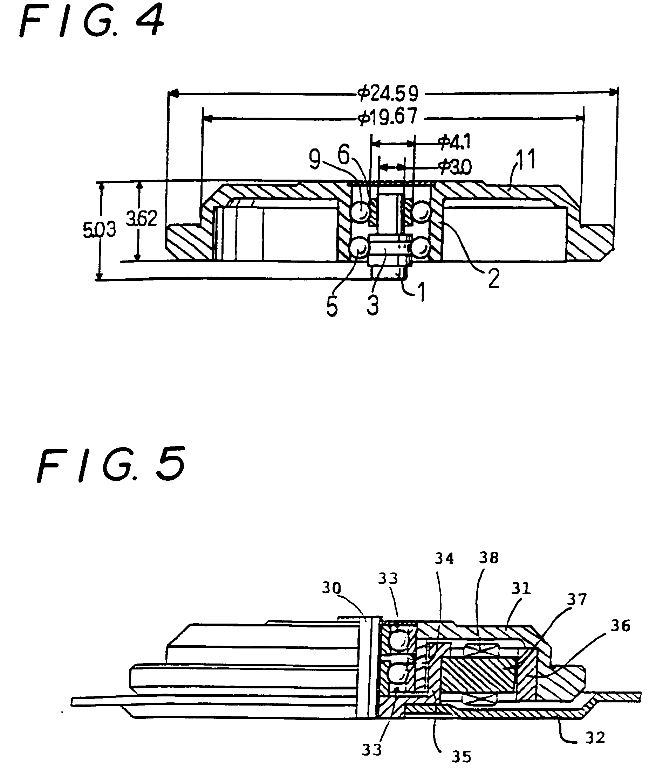

A usual spindle motor used for OA apparatuses, as shown in Figure 5 comprises a spindle 30, a rotor hub 31 and a base flange 32. The spindle is supported by a ball-bearing 33 which comprises an inner and an outer ring provided in a sleeve 34. The motor further comprises a yoke 37 supported on the base flange 32 by means of a yoke holder 35 and supporting a coil means 38. A permanent magnet 36 is connected for rotation with the hub 31. These components are individually formed as separate members.

Since the prior art motor components are thus independents parts, the motor has a large number of components. Besides, it is necessary to assemble these components, leading to a large number of steps involved in the motor's manufacture and thus to a high cost of manufacture.

Further, in the prior art ball-bearing structure, it is not easy to substantially improve or obtain vibrational accuracy of the spindle. Accordingly avoidance of vibration in prior art spindle motors is difficult to achieve.

A further prior spindle motor is described in patent US-A-5,045,738. The pre-characterising part of claim 1 is based on the embodiment shown in Figure 1 of this patent. The spindle has two bearing surfaces formed in its outer surface and a ring of ball-bearings is disposed between each of these bearing surfaces and an inner bearing surface formed in an inner surface of a motor hub sleeve. Motor parts arranged to rotate with the rotor are supported on a cylindrical axial extension of the motor hub sleeve. The rings of ball-bearings and other motor hub components are thus axially spaced. Patent JP-A-6052953 discloses a similar arrangement in which rotor hub bearings are also axially spaced from components mounted on the hub for rotation.

Patents US-A-4,713,704 and US-A-5,128,571 disclose spindle motors in which a rotatable hub is constituted by an outer sleeve connected to central spindle which is supported for rotation by rings of ball-bearings mounted in a fixed inner sleeve located between the spindle and the outer sleeve.

An object of the invention is to reduce the number of components and number of steps for assembling an apparatus such as that described above, thus reducing the cost of its manufacture.

Another object of the invention is to provide a compound ball-bearing, in which the inner or outer ring can be secured in a proper position by facilitating pre-loading or a press fitting technique, thus obtaining improved spindle vibration accuracy, and reducing spindle motor vibration.

In the compound ball-bearing according to the invention a compound ball bearing comprises a bearing assembly including a spindle, a sleeve surrounding said spindle having first and second inner races formed therein and first and second rows of balls between said inner races and said spindle, wherein said sleeve is integrally formed in one piece with a hub forming a one-piece rotor of a motor characterised in that:
(a) at least one outer race corresponding to one said inner race is formed in an inner ring fitted on said spindle; and
(b) said hub comprises a radial portion projecting radially outwardly from an outer periphery of one end of said sleeve and a cylindrical portion extending from an outer edge of said radial portion and surrounding said sleeve.

Preferably said spindle is a stepped spindle having a larger diameter portion and a smaller diameter portion, and said inner ring is fitted on the smaller diameter portion of said spindle.

Preferably the compound ball-bearing includes a second inner ring fitted on said spindle in which a second outer race is formed which corresponds to the other said inner race.

The invention will now be described by way of example only with reference to the accompanying drawings in which:
Figure 1 is a sectional view showing a first embodiment of the invention;
Figure 2 is a sectional view showing a second embodiment of the invention;
Figure 3 is a sectional view showing a third embodiment of the invention;
Figure 4 is a sectional view including dimensions showing a fourth embodiment of the invention;
Figure 5 is a view, partly in section, showing a typical prior art spindle motor.

In the figures like numerals are used to designate like parts.

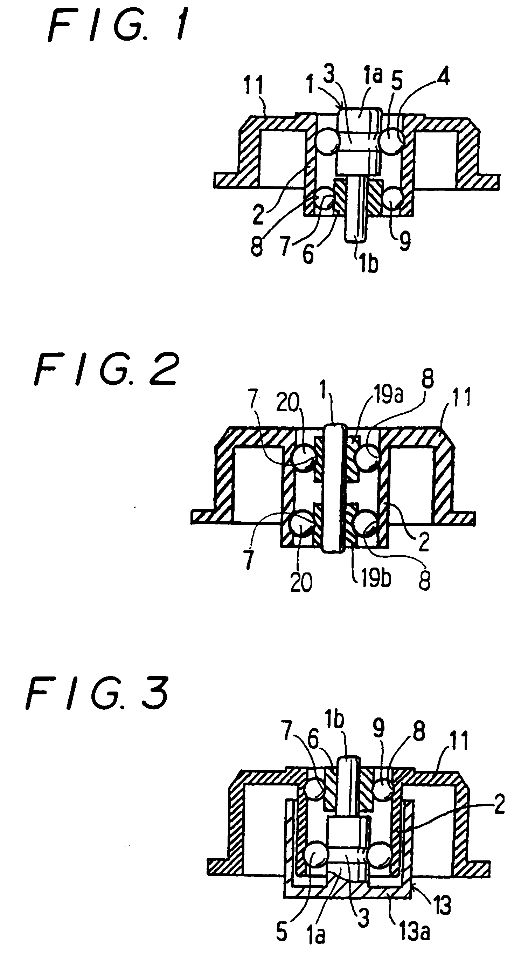

Figure 1 shows a first embodiment of the compound ball-bearing according to the invention. Referring to Figure 1 there is shown a double-row ball-bearing, in which a spindle 1 and a sleeve 2 corresponding thereto as an outer ring form a unit for retaining bearing balls 5 and 9 provided in two rows.

The spindle 1 is stepped and has a larger and a smaller diameter portion 1a and 1b respectively. The larger diameter portion la has an outer race 3 for a first row of balls, while the sleeve 2 has an inner race 4 corresponding to the outer race 3 of the spindle. Balls 5 in the first row are provided between the two races 3 and 4. On the smaller diameter portion 1b of the spindle, an inner ring 6 is fitted. A second row of balls 9 is provided between an outer race 7 formed in the inner ring and a corresponding inner race 8 formed in the sleeve 2.

In the embodiment of Figure 1, a hub 11 which serves as a rotor of a motor is provided by moulding such that it is integral with the outer periphery of one end of the sleeve 2.

Figure 2 shows a further embodiment, in which a hub 11 is moulded as a one-piece moulding with a sleeve 2. In this embodiment, upper and lower inner rings 19a and 19b are provided on the spindle 1. Balls 20 are provided between an outer race 7 of each inner ring and an inner race 8 formed in the sleeve 2.

In the embodiment of Figure 2 the inner ring 19a is secured to the spindle 1, while the other inner ring 19b is loosely fitted. The loosely fitted ring 19b is moved into its proper position by pre-loading and then secured with an adhesive to the spindle.

Figure 3 shows a further embodiment, in which a yoke holder 13 with a bottom 13a and surrounding a sleeve is formed by moulding such that an inner surface of its bottom 13a is integral with a larger diameter portion la of the spindle. In this embodiment, the hub 11 is moulded as a one-piece moulding with the sleeve 2.

Figure 4 shows a further embodiment, in which a hub 11 and a sleeve 2 of the bearing assembly are moulded together as a one-piece moulding. Figure 4 shows dimensions of various parts in mm.

In the embodiments shown in Figures 3 and 4, the inner ring 6 which has been loosely fitted on the spindle, is pre-loaded and secured with an adhesive to the spindle.

Each ball is suitably made of a high carbon chromium bearing steel.

According to the invention, a hub as a rotor of a motor, is moulded as a one-piece moulding with the sleeve constituting the bearing assembly. Thus, unlike the prior art bearing structures, in which all of the hub, the flange, the yoke holder or the like are separate from the bearing assembly, it is possible to readily assemble parts when manufacturing a motor. Efficient assembling is obtainable by using machines thus reducing the cost of motor manufacture. These merits are highly beneficial in industrial production. Furthermore when moulded as a one-piece moulding with the sleeve constituting the bearing assembly the motor manufacture or motor component assembling can be carried out without need of centring of the spindle with respect to any of the components noted above. Thus it is possible to provide a motor or the like, which is free from shaft vibration and has high accuracy of rotation.

Further, the inner ring can be readily pre-loaded, for installation on the appropriate part, by applying a pressure to it in the axial direction. The inner ring can thus be secured in a proper position to obtain a highly accurate ball-bearing.

## Claims

1. A compound ball bearing comprising a bearing assembly including a spindle (1), a sleeve (2) surrounding said spindle (1) having first and second inner races (4, 8) formed therein and first and second rows of balls (5, 9, 20) between said inner races and said spindle, wherein said sleeve (2) is integrally formed in one piece with a hub (11) forming a one-piece rotor of a motor characterised in that:
(a) at least one outer race (7) corresponding to one said inner race (8) is formed in an inner ring (6, 19a, 19b) fitted on said spindle (1); and
(b) said hub (11) comprises a radial portion projecting radially outwardly from an outer periphery of one end of said sleeve (2) and a cylindrical portion extending from an outer edge of said radial portion and surrounding said sleeve (2).

2. The compound ball bearing of claim 1, wherein said spindle (1) is a stepped spindle having a larger diameter portion (1a) and a smaller diameter portion (1b), and said inner ring (6) is fitted on the smaller diameter portion (1b) of said spindle (1).

3. The compound ball bearing of claim 1 including a second inner ring (19a, 19b) fitted on said spindle in which a second outer race is formed which corresponds to the other said inner race.

## Patentansprüche

1. Verbund-Kugellager, das eine Lageranordnung umfasst, die eine Spindel (1) einschliesst, eine Hülse (2), die die Spindel (1) umgibt, mit ersten und zweiten darin gebildeten inneren Laufringen (4, 8), und ersten und zweiten Reihen von Kugeln (5, 9, 20) zwischen den inneren Laufringen und der Spindel, worin die Hülse (2) integral in einem Stück mit einer Nabe (11) gebildet ist, was einen einteiligen Läufer eines Motors bildet, dadurch gekennzeichnet dass:
(a) wenigstens ein äusserer Laufring (7), der einem inneren Laufring (8) entspricht, in einem inneren Ring (6, 19a, 19b) gebildet ist, der auf der Spindel (1) angebracht ist; und
(b) die Nabe (11) ein radiales Teil umfasst, das sich von einer äusseren Peripherie von einem Ende der Hülse (2) radial nach aussen erstreckt, und ein zylindrisches Teil, das sich von einer äusseren Kante des radialen Teils erstreckt und die Hülse (2) umgibt.

2. Verbund-Kugellager nach Anspruch 1, in dem die Spindel (1) eine abgestufte Spindel mit einem grösseren Durchmesserteil (1a) und einem kleineren Durchmesserteil (1b) ist, und der innere Ring auf dem kleineren Durchmesserteil (1b) der Spindel (1) angebracht ist.

3. Verbund-Kugellager nach Anspruch 1, das einen zweiten inneren Ring (19a, 19b) einschliesst, der auf der Spindel angebracht ist, in dem ein zweiter äusserer Laufring gebildet ist, der dem anderen inneren Laufring entspricht.

## Revendications

1. Roulement composite à billes comportant un ensembles de roulement dont une broche (1), un manchon (2) autour de ladite broche (1) ayant un premier et un deuxième chemin intérieur (4, 8) formés à l'intérieur et une première et deuxième rangée de billes (5, 9, 20) entre lesdits chemins intérieurs et ladite broche, dont ledit manchon (2) est formé monobloc d'une pièce avec un moyeu (11) formant un rotor monobloc de moteur, caractérisé en ce que:
(a) un chemin extérieur (7) au minimum correspondant à un dit chemin intérieur (8) est formé dans une bague intérieure (6, 19a, 19b) montée sur ladite broche (1); et
(b) ledit moyeu (11) comporte une portion radiale en saillie radiale extérieure à partir du pourtour extérieur d'une extrémité dudit manchon et une portion cylindrique qui s'étend depuis un bord extérieur de ladite portion radiale et qui entoure ledit manchon.

2. Roulement composite à billes selon la revendication 1, dont ladite broche (1) est à gradins avec une portion diamétrale de grandeur supérieure (1a) et une portion diamétrale de grandeur inférieure (1b), et ladite bague intérieure (6) est montée sur la portion diamétrale de grandeur inférieure de ladite broche (1).

3. Roulement composite à billes selon la revendication 1, comportant une deuxième bague intérieure (19a, 19b) montée sur ladite broche dans laquelle un deuxième chemin extérieur est formé pour correspondre avec l'autre dit chemin intérieur.
